# EUROPEAN PATENT SPECIFICATION

(11) **EP 1 614 512 B1**
(45) Date of publication and mention of the grant of the patent: **22.08.2007**
(21) Application number: 05013915.3
(22) Date of filing: 28.06.2005
(51) Int. Cl.: B27B 5/20, B23D 45/04, B23D 45/06

(54) **Depth control mechanism for table saw**
Tiefenverstellmechanismus für eine Tischsäge
Commande de la profondeur pour une scie à table

(30) Priority: 07.07.2004 US 688401 P
(43) Date of publication of application: 11.01.2006
(73) Proprietor: Black & Decker Inc., Newark, Delaware 19711 (US)
(72) Inventor: Lambert, Torrey R., Baltimore, Maryland 21224 (US); Gehret, Robert S., Hampstead, Maryland 21074 (US); Wattenbach, Brian P., Menomonee Falls, Wisconsin 53051 (US)
(74) Representative: Bell, Ian Stephen

(56) References cited:
- EP-A- 0 586 174
- US-A- 3 570 564
- US-A- 4 531 441

## Description

This invention relates generally to a depth control mechanism for a table saw and more specifically to a depth control mechanism for a combination table/miter saw.

Typical table saws have a depth control mechanism to change the height of the blade relative to the table.

A power tool according to the preamble of claim 1 is disclosed in US 3,570,564.

It is an object of the invention to provide a depth control mechanism that is usable in combination table/miter saws.

In accordance with the present invention, an improved power tool with a depth control mechanism is employed. According to the present invention, there is provided a power tool comprising:
a base assembly;
a table supported by the base assembly,
a saw assembly pivotably supported by the table via a trunnion;
a link attached to the saw assembly;
a shaft threadingly engaged to the link,
wherein the shaft is engagable to the trunnion, so that, when the shaft is engaged to the trunnion, the saw assembly is pivoted relative to the trunnion when the shaft is rotated;
characterized by a latch (21L) pivotably attached to the trunnion for latching the shaft when engaged to the trunnion.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 illustrates a combination table/miter saw according to the invention, whereas FIGS. 1A-1B are side views of the combination table/miter saw in the miter saw and table saw modes, respectively; and
FIG. 2 is a side view of the depth control mechanism according to the invention;
FIG. 3 is a partial exploded view of a component of the depth control mechanism of FIG. 2; and
FIG. 4 illustrates a down stop assembly according to the invention, where FIGS. 4A-4B are side views of the down stop assembly when in the miter saw and table saw modes, respectively.

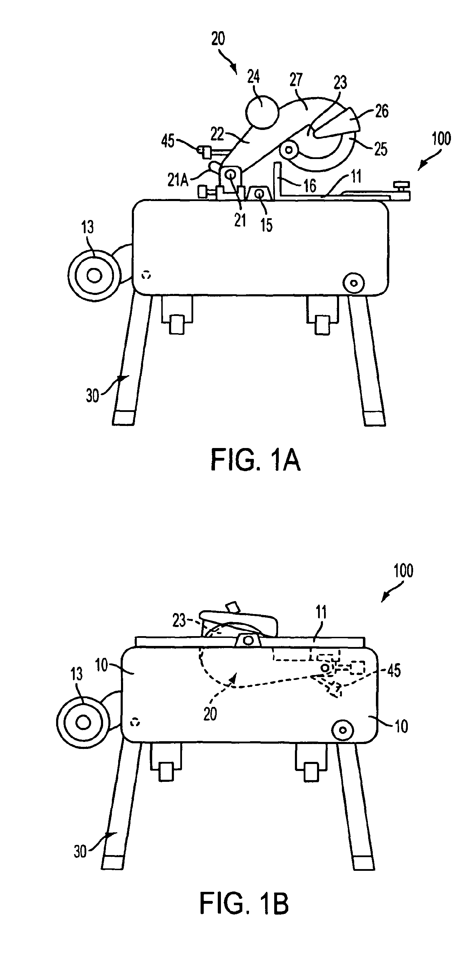

The invention is now described with reference to the accompanying figures, wherein like numerals designate like parts. Referring to FIG. 1, a combination table/miter saw 100 may include a base assembly 10, a table 11 supported by base assembly 10, and a saw assembly 20 supported by the table 11. Saw assembly 20 may include a trunnion assembly 21 disposed on the table 11, a pivotable arm 22 pivotably attached to trunnion assembly 21, a motor 24 supported by the arm 22 and driving a blade 23. Arm 22 also supports upper blade guard 27, which covers an upper part of blade 23. Lower blade guard 25 is pivotally attached to upper blade guard 27. An auxiliary blade guard 26 may be pivotably connected to lower blade guard 25.

Preferably, table 11 is pivotally attached to base assembly 10 via joint 15 so that, when the table 11 is in the orientation of FIG. 1A, the saw assembly 20 can act as a miter saw, i.e., saw assembly 20 can be pivoted downwardly towards table 11 to cut a workpiece placed on table 11.

On the other hand, when table 11 is rotated via joint 15 to the orientation of FIG. 1B, the saw 100 acts as a table saw, i.e., saw assembly 20 will be supported by and disposed underneath the table 11. In such orientation, blade 23 extends through the table 11, so that a user can dispose a workpiece on table 11 and push it towards blade 23 for cutting.

Persons skilled in the art will recognize that the invention described below can be applicable to non-combined table saws.

Preferably, base assembly 10 has at least one wheel 13 thereon.

Base assembly 10 may also support four leg assemblies 30. Preferably leg assemblies 30 are pivotally attached to base assembly 10.

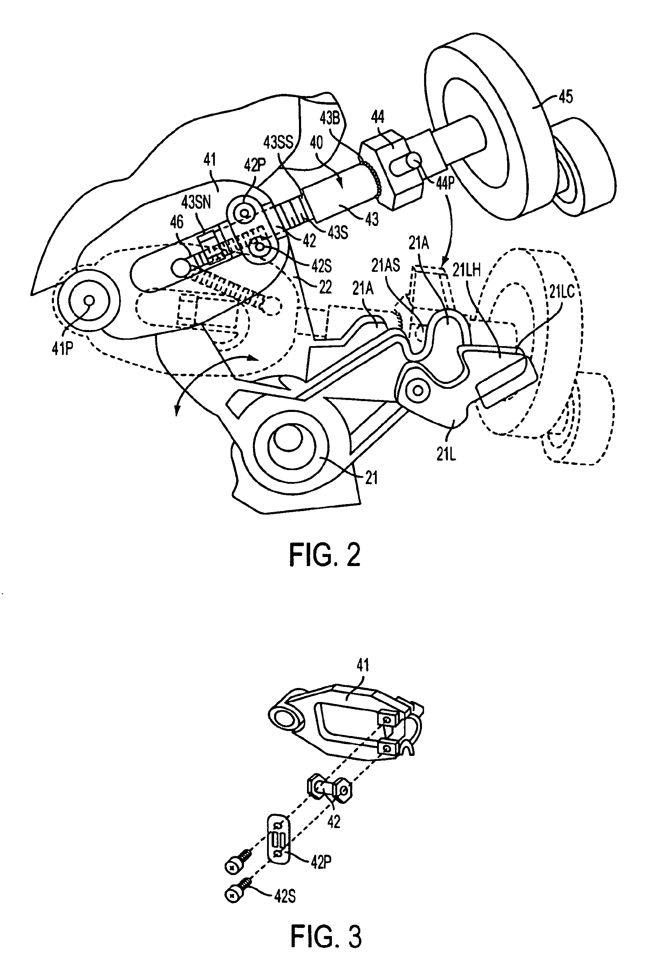

It is preferable to provide a means for adjusting the depth of blade 23 when saw 100 is in table saw mode that does not substantially affect the chopping motion when saw 100 is in miter saw mode. The depth control mechanism 40 shown in FIGS. 2-3 will meet such requirement.

Depth control mechanism 40 may include a link 41 pivotally attached to arm 22 via pivot joint 41 P. Link 41 may have a threaded portion.

Link 41 may be made of aluminum. Preferably, link 41 carries a threaded bushing 42. Bushing 42 may be sandwiched between link 41 and a plate 42P. Plate 42P is attached to link 41 via screws 42S. Bushing 42 may be made of steel.

A shaft 43 may be threadingly engaged to bushing 42 and/or to link 41. Shaft 43 may have a threaded portion 43S to threadingly engage bushing 42. Shaft 43 may have a handle 45 for rotating shaft 43 relative to bushing 42.

Persons skilled in the art will recognize that, when shaft 43 is rotated, shaft 43 will move axially along its longitudinal axis. Shaft 43 may have a shoulder 43SS adjacent to the threaded portion 43S and a nut 43SN threadingly engaged to threaded portion 43S to limit the range of movement along the longitudinal axis of shaft 43.

A sleeve 44 may be rotatably disposed on shaft 43. Bearings 43B may be disposed between sleeve 44 and shaft 43. Sleeve 44 may have at least one protrusion 44P.

Trunnion 21 may have at least one (and preferably two) arm(s) 21A with slot(s) 21AS. Protrusion(s) 44P are received in slot(s) 21AS.

A latch 21L may be pivotally attached to one arm 21A. Latch 21L may have a hook portion 21AH to capture protrusion 44P in slot 21AS. Preferably latch 21L may be pivoted between a capture position capturing protrusion 44P and an open position not capturing protrusion 44P. A spring (not shown) preferably biases latch 21L towards the capture position.

With such arrangement, when changing the mode of saw 100 from miter saw mode to table saw mode, the user moves the shaft 43 downwardly so that protrusion 44P is in slot 21AS. Latch 21L may have an inclined surface 21LC, so that when protrusion 44P is moved into latch 21L, contact between protrusion 44P and surface 21LC cause latch 21L to move towards the open position. When protrusion 44P is in slot 21AS, the spring will cause latch 21L to return to the capture position.

The user can then pivot table 11 to change the mode of saw 100. Referring to FIG. 1B, handle 45 will be towards the front of saw 100, accessible by the user. In order to adjust the height of blade 23 relative to table 11, the user needs to rotate handle 45.

As handle 45 is rotated, shaft 43 rotates. Due to the engagement between threaded portion 43S and bushing 42, shaft 43 will move along its longitudinal axis relative to bushing 42. Because the position of one end of shaft 43 is fixed (at protrusion 44P), the movement of shaft 43 relative to bushing 42 will cause the distance between protrusion 44P and bushing 42 to vary. Because bushing 42 is part of link 41, which in turn is connected to arm 22, arm 22 will move relative to trunnion 21. Because arm 22 is part of saw assembly 20, which includes blade 23, blade 23 will move relative to table 11.

A compression spring 46 may be pivotally attached to link 41 at one end and to arm 22 at the other end at a point between pivot point 41 P and bushing 43. Such compression spring 46 will maintain link 41 (and shaft 43) in an upper position (shown in solid lines in FIG. 2) so that saw assembly 20 can be pivoted downwardly for chopping a workpiece when saw 100 is in miter saw mode, and a lower position (shown in broken lines in FIG. 2) for use to control the depth of blade 23 when saw 100 is in table saw mode, as explained above. Persons skilled in the art will recognize that compression spring 46 should be strong enough to maintain link 41 and shaft 43 in the upper position against the force of gravity, but not strong enough that a user cannot move shaft 43 to the lower position.

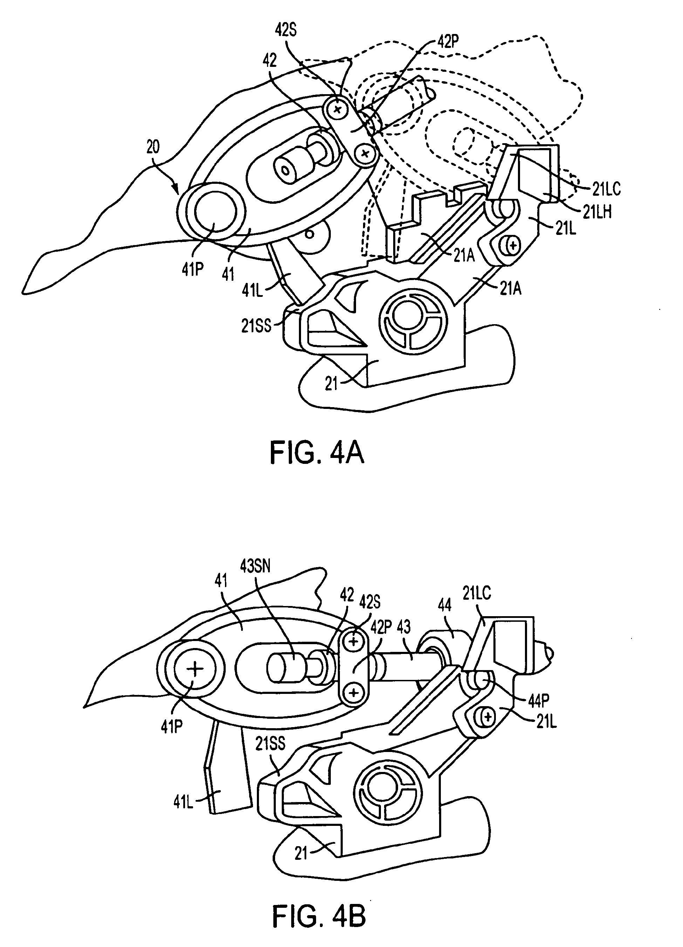

Referring to FIG. 4, link 41 may have a leg 41 L. Trunnion 21 may have a stop surface 21SS which contacts leg 41L to limit the downward motion of the saw assembly 20 during the chopping operation. Person skilled in the art will recognize that leg 41 L and stop surface 21SS in effect provide a down stop assembly when saw 100 is in the miter saw mode.

As shown in FIG. 4A, when saw 100 is in miter saw mode, the saw assembly 20 (and link 41) will be in an upward position (as shown in broken lines). When saw assembly 20 is pivoted downwardly in a chopping action, leg 41 L will contact stop surface 21 SS, thus limiting the range of downward motion.

As shown in FIG. 4B, when saw 100 is in table saw mode, protrusion 44P will be captured by latch 21L. In such position, leg 41 L will bypass (and not contact) stop surface 21SS, allowing a greater degree of travel so that more of blade 23 can extend through the table 11 for a greater depth of cut.

Persons skilled in the art may recognize other additions or alternatives to the means disclosed herein. However, all these additions and/or alterations are considered to be equivalents of the present invention.

## Claims

1. A power tool (100) comprising:
a base assembly(10);
a table (11) supported by the base assembly;
a saw assembly (20) pivotably supported by the table via a trunnion (21);
a link (41) attached to the saw assembly;
a shaft (43) threadingly engaged to the link;
wherein the shaft is engagable to the trunnion, so that, when the shaft is engaged to the trunnion, the saw assembly is pivoted relative to the trunnion when the shaft is rotated;
**characterized by** a latch (21L) pivotably attached to the trunnion for latching the shaft when engaged to the trunnion.

2. The power tool of Claim 1, wherein the shaft is movable between a first position engaging the trunnion, and a second position not engaging the trunnion.

3. The power tool of Claims 2, wherein a spring (46) biases the shaft towards at least one of the first and second positions.

4. The power tool of any one of the preceding Claims, wherein the latch is movable between a first position latching the shaft, and a second position not latching the shaft.

5. The power tool of Claim 4, wherein a spring biases the latch towards the first position.

6. The power tool of any one of the preceding Claims, further comprising a handle (45) attached to the shaft for rotating the shaft.

7. The power tool of any one of the preceding Claims, wherein the table is pivotably supported by the base assembly.

8. The power tool of Claim 7, wherein the table can be moved between a first position where the saw assembly is above the table, and a second position where the saw assembly is below the table.

9. The power tool of Claim 8, wherein the shaft is engaged to the trunnion when the table is in the second position.

10. The power tool of Claim 7, wherein a blade(23) extends above the table when the table is in the second position.

11. The power tool of Claim 10, wherein height of the blade above the table is adjusted by rotating the shaft.

12. The power tool of Claim 10, wherein height of the blade above the table is adjusted by changing distance between the link and the trunnion.

13. The power tool of any one of the preceding Claims, wherein the link has a protrusion (41L) that bypasses the trunnion when the shaft is engaged to the trunnion.

14. The power tool of Claim 13, wherein the protrusion contacts the trunnion when the shaft is not engaged to the trunnion.

## Patentansprüche

1. Angetriebenes Werkzeug (100) mit
einer Basisanordnung (10),
einem von der Basisanordnung gehaltenen Tisch (11),
einer Sägeanordnung (20), die schwenkbar von dem Tisch über einen Zapfen (21) gehalten ist,
einem an der Sägeanordnung angebrachten Verbindungselement (41),
einer mit dem Verbindungselement in Gewindeeingriff stehenden Welle (43),
wobei die Welle mit dem Zapfen eingreifen kann, so dass, wenn die Welle mit dem Zapfen eingreift, die Sägeanordnung in Bezug auf den Zapfen geschwenkt wird, wenn die Welle gedreht wird,
**gekennzeichnet durch** einen Riegel (21L), der an dem Zapfen zum Verriegeln der Welle angebracht ist, wenn diese mit dem Zapfen eingreift.

2. Angetriebenes Werkzeug nach Anspruch 1, wobei die Welle zwischen einer ersten Stellung, in der sie mit dem Zapfen eingreift, und einer zweiten Stellung, in der sie nicht mit dem Zapfen eingreift, bewegbar ist.

3. Angetriebenes Werkzeug nach Anspruch 2, wobei eine Feder (46) die Welle in wenigstens eine der ersten und zweiten Stellungen vorspannt.

4. Angetriebenes Werkzeug nach einem der vorhergehenden Ansprüche, wobei der Riegel zwischen einer ersten Stellung, in der die Welle verriegelt wird, und einer zweiten Stellung, in der die Welle nicht verriegelt wird, bewegbar ist.

5. Angetriebenes Werkzeug nach Anspruch 4, wobei eine Feder den Riegel in die erste Stellung vorspannt.

6. Angetriebenes Werkzeug nach einem der vorhergehenden Ansprüche, ferner mit einem Griff (45), der an der Welle zum Drehen der Welle angebracht ist.

7. Angetriebenes Werkzeug nach einem der vorhergehenden Ansprüche, wobei der Tisch schwenkbar von der Basisanordnung gehalten ist.

8. Angetriebenes Werkzeug nach Anspruch 7, wobei der Tisch zwischen einer ersten Stellung, wo die Sägeanordnung über dem Tisch ist, und einer zweiten Stellung bewegt werden kann, wo die Sägeanordnung unter dem Tisch ist.

9. Angetriebenes Werkzeug nach Anspruch 8, wobei die Welle mit dem Zapfen eingreift, wenn der Tisch in der zweiten Stellung ist.

10. Angetriebenes Werkzeug nach Anspruch 7, wobei sich ein Sägeblatt (23) über den Tisch erstreckt, wenn der Tisch in der zweiten Stellung ist.

11. Angetriebenes Werkzeug nach Anspruch 10, wobei die Höhe de Sägeblatts über dem Tisch durch Drehen der Welle eingestellt wird.

12. Angetriebenes Werkzeug nach Anspruch 10, wobei die Höhe des Sägeblatts über dem Tisch durch Verändern des Abstandes zwischen dem Verbindungselement und dem Zapfen eingestellt wird.

13. Angetriebenes Werkzeug nach einem der vorhergehenden Ansprüche, wobei das Verbindungselement einen Vorsprung (41L) hat, der den Zapfen umgeht, wenn die Welle mit dem Zapfen eingreift.

14. Angetriebenes Werkzeug nach Anspruch 13, wobei der Vorsprung den Zapfen berührt, wenn die Welle nicht mit dem Zapfen eingreift.

## Revendications

1. Outil électrique (100) comprenant :
■ un ensemble de base (10);
■ une table (11) soutenue par l'ensemble de base;
■ un ensemble de scie (20) soutenu de manière pivotante par la table via un tourillon (21) ;
■ un maillon (41) fixé à l'ensemble de scie ;
■ un arbre (43) mis en prise par filetage avec le maillon ;
■ dans lequel l'arbre peut venir en prise avec le tourillon, de sorte que, lorsque l'arbre est en prise avec le tourillon, l'ensemble de scie pivote par rapport au tourillon, lorsque l'arbre est mis en rotation ;
**caractérisé par** un verrouillage (21L) fixé de manière pivotante au tourillon pour verrouiller l'arbre lorsque ce dernier est mis en prise avec le tourillon.

2. Outil électrique selon la revendication 1, dans lequel l'arbre est mobile entre une première position en prise avec le tourillon et une deuxième position désengagée du tourillon.

3. Outil électrique selon la revendication 2, dans lequel un ressort (46) sollicite l'arbre en direction d'au moins l'une des première et deuxième positions.

4. Outil électrique selon l'une quelconque des revendications précédentes, dans lequel le verrouillage est mobile entre une première position verrouillant l'arbre et une deuxième position ne verrouillant pas l'arbre.

5. Outil électrique selon la revendication 4, dans lequel un ressort sollicite le verrouillage en direction de la première position.

6. Outil électrique selon l'une quelconque des revendications précédentes, comprenant en outre une poignée (45) fixée à l'arbre pour permettre la rotation de l'arbre.

7. Outil électrique selon l'une quelconque des revendications précédentes, dans lequel la table est soutenue de manière pivotante par l'ensemble de base.

8. Outil électrique selon la revendication 7, dans lequel la table peut être déplacée entre une première position dans laquelle l'ensemble de scie est au-dessus de la table, et une deuxième position dans laquelle l'ensemble de scie est au-dessous de la table.

9. Outil électrique selon la revendication 8, dans lequel l'arbre est mis en prise avec le tourillon lorsque la table est dans la deuxième position.

10. Outil électrique selon la revendication 7, dans lequel une lame (23) s'étend au-dessus de la table lorsque la table est dans la deuxième position.

11. Outil électrique selon la revendication 10, dans lequel la hauteur de la lame au-dessus de la table est ajustée au moyen de la rotation de l'arbre.

12. Outil électrique selon la revendication 10, dans lequel la hauteur de la lame au-dessus de la table est ajustée en modifiant la distance entre le maillon et le tourillon.

13. Outil électrique selon l'une quelconque des revendications précédentes, dans lequel le maillon présente une saillie (41L) qui dévie le tourillon lorsque l'arbre est en prise avec le tourillon.

14. Outil électrique selon la revendication 13, dans lequel la saillie vient en contact avec le tourillon lorsque l'arbre est désengagé du tourillon.
